# EUROPÄISCHE PATENTSCHRIFT

(11) **EP 0 687 832 B1**
(45) Veröffentlichungstag und Bekanntmachung des Hinweises auf die Patenterteilung: **10.03.1999**
(21) Anmeldenummer: 95106054.0
(22) Anmeldetag: 22.04.1995
(51) Int. Cl.: F16F 9/56, F16F 9/02, A47B 9/10, A47C 3/30, F16B 7/14

(54) **Längenverstellbarer Gasfeder und längenverstellbare Säule für Stühle, Tische mit einer längenverstellbaren Gasfeder**
Adjustable-length gas spring and adjustable-length column for chairs and tables with a gas spring of adjustable length
Ressort pneumatique réglable en longueur et colonne réglable en longueur pour chaises et tables ayant un ressort de longueur réglable

(30) Priorität: 16.06.1994 DE 4420914
(43) Veröffentlichungstag der Anmeldung: 20.12.1995
(73) Patentinhaber: SUSPA COMPART Aktiengesellschaft, 90518 Altdorf (DE)
(72) Erfinder: Bauer, Hans-Peter, D-90518 Altdorf (DE); Bauer, Hans-Jürgen, D-90518 Altdorf (DE)
(74) Vertreter: Rau, Manfred, Dr. Dipl.-Ing.

(56) Entgegenhaltungen:
- DE-A- 1 812 282
- DE-B- 1 924 254
- FR-A- 2 586 771
- US-A- 4 096 785

## Beschreibung

Die Erfindung betrifft eine längenverstellbare Gasfeder nach dem Oberbegriff des Anspruches 1 und eine längenverstellbare Säule für Stühle, Tische oder dergleichen nach dem Oberbegriff des Anspruches 6.

Derartige, aus der DE 37 38 298 Al (entsprechend US-PS 4 844 392) bekannte längenverstellbare Gasfedern weisen einen Ventilkörper auf, der an seiner Außenseite unter anderem eine Ringnut aufweist, in der sich eine Ringdichtung befindet, die dichtend gegen die Innenwand des Außenzylinders anliegt. Der Dichtungskörper ist üblicherweise zweiteilig ausgebildet, wobei in einer äußeren Abschlußscheibe eine nach außen offene Ringnut ausgebildet ist, die durch eine Hülse einseitig vervollständigt wird. Diese Hülse nimmt eine an der Kolbenstange anliegende Dichtung auf. In der Ringnut ist eine an der Innenwand des Außenzylinders anliegende Dichtung angeordnet. Das aus Ventil, Kolben mit Kolbenstange und Dichtungskörper mit Dichtungen und dem Innenzylinder bestehende vormontierte Paket wird einseitig, und zwar regelmäßig mit dem Ventil voraus, in den Außenzylinder eingeschoben. Anschließend werden die Ränder des Außenzylinders um den Ventilkörper bzw. die Abschlußplatte herumgebördelt. Da bei dieser Art des Einschiebens die in der Ringnut des Ventilkörpers befindliche Dichtung über die volle Länge durch den Außenzylinder geschoben wird, muß dessen Oberfläche von sehr guter Oberflächenqualität und geringer Rauhigkeit sein, damit die Ringdichtung hierbei nicht beschädigt wird. Aus diesem Grunde werden für den Außerzylinder entweder nahtlos gezogene Stahlrohre oder zumindest nachgezogene geschweißte Stahlrohre eingesetzt. Nahtlos gezogene Rohre oder aber auch nachgezogene geschweißte Rohre sind sehr teuer. Der Ventilkörper einerseits und der Dichtungskörper andererseits sind durch Umbördelungen der benachbarten Ränder des Außenzylinders in Richtung der Mittel-Längs-Achse festgelegt. Beim Einsatz derartiger Gasfedern in längenverstellbaren Säulen für Stühle, Tische oder dergleichen setzt sich das dem Dichtungskörper zugeordnete kolbenstangenaustrittsseitige Ende des Gehäuses beim weitestmöglichen Einfahren des Gehäuses in das Standrohr der Säule auf das üblicherweise aus einem ringzylindrischem Gummikörper bestehende federelastische Dämpfungselement auf, das sich wiederum auf einem Drehlager befindet. In weitestmöglich aus dem Standrohr ausgeschobenem Zustand der Gasfeder ist deren Gehäuse nicht mehr über seine volle Länge in einer Führungsbüchse angeordnet, in der es gegenüber dem Standrohr geführt ist. Dies erhöht die Verkantungsgefahr.

Der Erfindung liegt die Aufgabe zugrunde, eine Gasfeder der gattungsgemäßen Art so auszugestalten, daß sie beim Einsatz in einer längenverstellbaren Säule für Stühle, Tische oder dergleichen auch bei aus dem Standrohr ausgefahrenem Gehäuse mit konstruktiv und fertigungstechnisch geringstmöglichem Aufwand eine möglichst große Führungslänge aufweist.

Diese Aufgabe wird erfindungsgemäß bei einer längenverstellbaren Gasfeder nach dem Oberbegriff des Anspruches 1 durch die Merkmale im Kennzeichnungsteil des Anspruches 1 und bei einer längenverstellbaren Säule nach dem Oberbegriff des Anspruches 6 durch die Merkmale im Kennzeichnungsteil des Anspruches 6 gelöst. Durch die erfindungsgemäßen Maßnahmen wird erreicht, daß die Endmontage der Gasfeder besonders einfach ist, da der Rand des Außenzylinders lediglich an seiner Innenseite mit einem oder mehreren gleichmäßig über den Umfang des Außenzylinders verteilt angeordneten Vorsprüngen versehen wird. Dies läßt sich fertigungstechnisch besonders einfach realisieren. Der über den Dichtungskörper vorstehende Rand verlängert das Gehäuse, gibt also bei weitestmöglich aus dem Standrohr ausgefahrener Gasfeder zusätzliche Führungslänge in der Führungsbüchse. Andererseits stört dieser vorstehende Rand beim weitestmöglichen Einfahren der Gasfeder in das Standrohr nicht, da der Rand das ohnehin vorhandene ringförmige Dämpfungsfederelement und gegebenenfalls auch noch das Drehlager übergreift.

Der zumindest eine den Dichtungskörper haltende Vorsprung läßt sich auf besonders einfache Weise durch die Maßnahmen nach den Ansprüchen 2 bis 4 realisieren.

Die erfindungsgemäßen Maßnahmen haben weiterhin zur Folge, daß entsprechend der Weiterbildung nach Anspruch 5 zumindest die über die volle Länge des Außenzylinders durch diesen hindurchgeschobene Ringdichtung während des Hindurchschiebens nicht oder nur mit ganz geringer Reibung an der Innenwand des Außenzylinders anliegt und nachträglich durch Zusammendrücken der beiden die Ringdichtung zwischen sich aufnehmenden Teile des Ventilkörpers und/oder des Dichtungskörpers in Achsrichtung zusammengedrückt und damit radial nach außen verspannt wird. Auf diese Weise wird die Dichtungsanlage zwischen Ringdichtung und Innenwand des Außenzylinders erst erzeugt, wenn die Ringdichtung sich in ihrer vorbestimmten Lage gegenüber der Innenwand des Außenzylinders befindet. Die Maßnahmen können einerseits am Ventil und andererseits am Dichtungskörper, also am Kolbenstangenaustritt vorgesehen sein; es genügt naturgemäß aber auch, wenn sie in dem Bereich vorgesehen sind, der über die volle Länge des Außenzylinders durch diesen hindurchgeschoben wird. Die erfindungsgemäßen Maßnahmen können auch eingesetzt werden, um eine Möglichkeit zum Füllen der Gasfeder mit Druckgas zu schaffen. Diese Maßnahmen können selbstverständlich auch unabhängig davon eingesetzt werden, ob der Rand des Außerzylinders vorsteht.

Einzelheiten der Erfindung ergeben sich aus der nachfolgenden Beschreibung eines Ausführungsbeispieles anhand der Zeichnung. Es zeigt
- Fig. 1: eine längenverstellbare Gasfeder im Längsschnitt,
- Fig. 2: einen Teil des Ventilkörpers der Gasfeder mit einer Ringdichtung im Längsschnitt,
- Fig. 3: eine Draufsicht auf das ventilseitige Ende der Gasfeder gemäß dem Sichtpfeil III in Fig. 1,
- Fig. 4: eine Draufsicht auf das kolbenstangenseitige Ende der Gasfeder gemäß dem Sichtpfeil IV in Fig. 1,
- Fig. 5: einen Teil-Längsschnitt einer leicht abgewandelten Ausführungsform einer längenverstellbaren Gasfeder,
- Fig. 6: einen Teil-Längsschnitt einer weiteren leicht abgewandelten Ausführungsform einer längenverstellbaren Gasfeder,
- Fig. 7: einen Teil-Längsschnitt einer weiteren leicht abgewandelten Ausführungsform einer längenverstellbaren Gasfeder,
- Fig. 8: einen Teil-Längsschnitt einer weiteren gegenüber Fig. 5 leicht abgewandelten Ausführungsform einer längenverstellbaren Gasfeder,
- Fig. 9: einen Teil-Längsschnitt einer weiteren gegenüber Fig. 5 leicht abgewandelten Ausführungsform einer längenverstellbaren Gasfeder und
- Fig. 10: eine längenverstellbare Säule für Stühle, Tische oder dergleichen mit einer Gasfeder nach Fig. 1, 5, 6, 7, 8 oder 9.

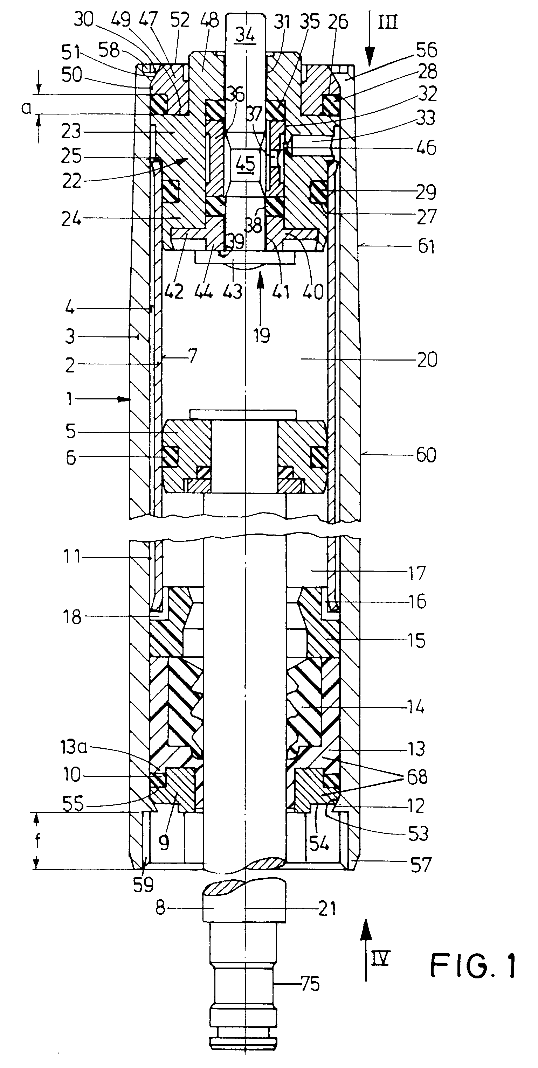

Die in Fig. 1 dargestellte längenverstellbare Gasfeder weist ein Gehäuse 1 auf, das im wesentlichen aus zwei konzentrisch ineinander gelagerten Rohren mit unterschiedlichem Durchmesser, nämlich einem Innenzylinder 2 und einem Außenzylinder 3 besteht. Zwischen dem Außenzylinder 3 und dem Innenzylinder 2 ist aufgrund des unterschiedlichen Durchmessers von Innenzylinder 2 und Außenzylinder 3 ein Ringraum 4 gebildet.

In dem Innenzylinder 2 ist ein etwa ringförmiger Kolben 5 axial verschiebbar angeordnet, der über einen Dichtungsring 6 gasdicht mit seinem Außenumfang gegenüber der Innenwand 7 des Innenzylinders 2 abgedichtet ist. Der Kolben 5 ist an einem Ende einer koaxial zum Gehäuse 1 geführten Kolbenstange 8 befestigt. Diese Kolbenstange 8 ist aus einem Ende des Gehäuses 1 herausgeführt. An diesem Ende ist das Gehäuse 1 durch einen Abschlußring 9 verschlossen, der an seinem Außenumfang mittels einer Ringdichtung 10 gegenüber der Innenwand 11 des Außenzylinders 3 gasdicht abgedichtet ist. Der Abschlußring 9 ist durch nasenartige Vorsprünge 12 des Außenzylinders 3 axial nach außen gehalten. Auf der Innenseite liegt gegen den Abschlußring 9 eine topfförmige Hülse 13 an, die eine Mehrfach-Lippen-Dichtung 14 aufnimmt, die mit ihren Lippen dichtend gegen die Kolbenstange 8 anliegt. Dadurch wird ein Gasaustritt entlang der Oberfläche der Kolbenstange 8 nach außen unterbunden.

Gegen die Hülse 13 stützt sich vom Innenraum des Gehäuses 1 her ein an der Innenwand 11 des Außenzylinders 3 anliegendes Zentrierstück 15 ab, das mit Rippen 16 versehen ist, auf denen der Innenzylinder 2 mit seiner Innenwand 7 radial abgestützt, also zentriert ist. Auf diesen Rippen 16 ist der Innerzylinder 2 auch axial fest abgestützt, also axial einseitig festgelegt. Dadurch daß nur Rippen 16 zur Zentrierung und axialen Abstützung des Innenzylinders 2 vorgesehen sind, ist in diesem Bereich der Ringraum 4 mit dem Gehäuseraum 17 im Innenzylinder 2 verbunden, der zwischen dem Kolben 5, dem kolbenstangenaustrittsseitigen Ende des Gehäuses 1 und der Innenwand 7 des Innenzylinders 2 begrenzt wird. Zwischen den Rippen 16 sind also Überströmkanäle 18 zwischen dem Gehäuseraum 17 und dem Ringraum 4 gebildet.

An dem dem Kolbenstangenaustritt entgegengesetzten Ende des Gehäuses 1 ist ein Ventil 19 angeordnet, mittels dessen der im Innenzylinder 2 zwischen dem Kolben 5 und dem Ventil 19 befindliche Gehäuseraum 20 mit dem Ringraum 4 und damit dem anderen Gehäuseraum 17 verbunden bzw. von diesem getrennt werden kann.

Die gesamte Gasfeder einschließlich des Ventils 19 ist im wesentlichen symmetrisch zur Mittel-Längs-Achse 21 aufgebaut. Das Ventil 19 weist einen Ventilkörper 22 auf, der aus einem äußeren Abschnitt 23 und einem inneren Abschnitt 24 gebildet ist. Der äußere Abschnitt 23 liegt gegen die Innenwand 11 des Außenzylinders 3 an, wodurch der Ventilkörper 22 relativ zum Außenzylinder 3 zentriert wird. Der ebenfalls zylindrische Abschnitt 24 geringeren Durchmessers liegt gegen die Innenwand 7 des Innenzylinders 2 an, wodurch eine Zentrierung zwischen Ventilkörper 22 und Innenzylinder 2 und damit auch zwischen Innenzylinder 2 und Außenzylinder 3 erfolgt. Im Übergangsbereich vom Abschnitt 23 zum Abschnitt 24 ist ein Anschlagbund 25 ausgebildet, mittels dessen der Ventilkörper 22 in axialer Richtung gegen den Innenzylinder 2 anliegt. Im Bereich des Abschnitts 23 einerseits und des Abschnitts 24 andererseits sind in entsprechenden Ringnuten 26, 27 Ringdichtungen 28, 29 angeordnet, mittels derer jeweils eine gasdichte Verbindung zwischen dem Abschnitt 23 und der Innenwand 11 des Außenzylinders 3 einerseits und zwischen dem inneren Abschnitt 24 und der Innenwand 7 des Innenzylinders 2 andererseits erreicht wird. Der Ventilkörper ist axial nach außen durch nasenartige Vorsprünge 30 des Außenzylinders 3 gehalten, wodurch wiederum auch der Innenzylinder 2 axial nach außen festgelegt ist.

Der Ventilkörper 22 ist im Bereich seines äußeren Abschnitts 23 mit einer zylindrischen, koaxialen Führungsbohrung 31 versehen, an die sich in Richtung zum Gehäuseraum 20 hin ein im wesentlichen noch im äußeren Abschnitt 23 befindlicher Ventilkörper-Innenraum 32 anschließt. Dieser Innenraum 32 hat einen größeren Durchmesser als die Führungsbohrung 31. In diesen Innenraum 32 mündet ein den Ventilkörper 22 radial durchsetzender Überströmkanal 33 ein, der an seiner Außenseite in den Ringraum 4 einmündet.

Im Ventilkörper 22 ist ein Ventilstift 34 angeordnet, der nach außen aus dem Ventilkörper 22 und damit aus der Gasfeder herausragt. Dieser im wesentlichen zylindrische Ventilstift 34 ist in der Führungsbohrung 31 geführt. Am Übergang von der Führungsbohrung 31 zum Innenraum 32 ist eine Innen-Ringdichtung 35 angeordnet, die axial nach außen durch den Übergang zwischen Innenraum 32 zur Führungsbohrung 31 festgelegt ist, und die radial einerseits am Ventilstift 34 und andererseits an der Wand des Innenraums 32 anliegt, so daß ein Gasaustritt durch die Führungsbohrung 31 ausgeschlossen ist. Die Innen-Ringdichtung 35 ist axial in Richtung auf den Gehäuseraum 20 durch eine Distanzhülse 36 festgelegt, die mit einer oder mehreren Durchtrittsöffnungen 37 versehen ist, so daß das Gas auch in die Distanzhülse 36 gelangen kann.

An dem dem Gehäuseraum 20 zugewandten Ende der Distanzhülse 36 liegt ebenfalls eine Innen-Ringdichtung 38 an, die radial gegen die Innenwand des Innenraums 32 und gegen den Ventilstift 34 anliegt. Axial zum Gehäuseraum 20 liegt sie gegen eine Anlagefläche 39 an.

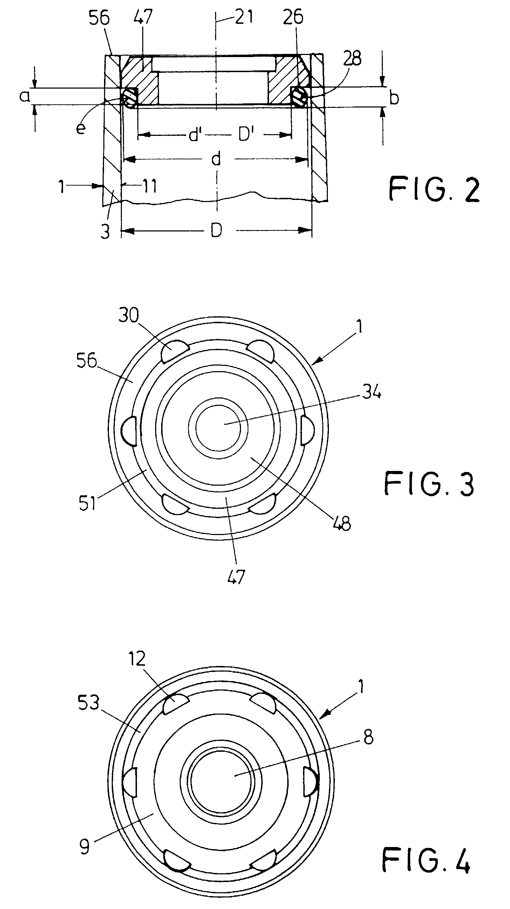

Diese Anlagefläche 39 ist an einem hülsenförmigen Abschlußteil 40 ausgebildet, das den Ventilstift 34 unter Bildung eines Ringspaltes 41 umgibt. Ein radial nach außen vorstehender Ringbund 42 dieses Abschlußteils 40 ist im inneren Abschnitt 24 des Ventilkörpers 22 axial festgelegt. Der Ventilstift 34 ist mittels eines Haltetellers 43 gegen ein Herausschieben aus dem Ventilkörper 22 nach außen gesichert. Dieser Halteteller 43 liegt - bei geschlossenem Ventil 19 - gegen eine dem Gehäuseraum 20 zugewandte Anschlagfläche 44 des Abschlußteils 40 an. In der in den Fig. 1 und 2 dargestellten Ruhelage des Ventilstiftes 34, in dem das Ventil 19 geschlossen ist, befindet sich eine Einschnürung 45 des Ventilstiftes 34 zwischen den Innen-Ringdichtungen 35 und 38, d.h. der Gehäuseraum 20 ist gasdicht vom Ringraum 4 und damit vom Gehäuseraum 17 getrennt. Durch Einschieben des Ventilstiftes 34 in den Ventilkörper 22 überbrückt die Einschnürung 45 die dem Gehäuseraum 20 zugewandte Innen-Ringdichtung 38, so daß Gas vom Gehäuseraum 17 durch den Ringraum 4, den Ventilkörper-Innenraum 32 und den Ringspalt 41 in den Gehäuseraum 20 und umgekehrt strömen kann. Die grundsätzliche Wirkungsweise dieser mindestens teilweise mit Druckgas gefüllten, längenverstellbaren Gasfeder ist im übrigen allgemein bekannt, beispielsweise aus der DE-PS 18 12 282 (entsprechend US-PS 3 656 593).

Der Überströmkanal 33 weist eine Drosselstelle 46 geringen Querschnitts auf. Der Durchmesser einer solchen Drosselstelle 46 ist kleiner als 1,0 mm und bevorzugt im Bereich von 0,4 bis 0,7 mm. Wenn der Überströmkanal 33 mit einer solchen Drosselstelle 46 versehen ist, dann geht die Ein- und Ausfahrbewegung der Kolbenstange 8 bei geöffnetem Ventil 19 langsam vonstatten.

Wenn vorstehend von Gas oder Druckgas gesprochen wurde, so kann es sich hierbei auch um eine von einem Druckgas unter Druck gesetzte Flüssigkeit handeln, wenn nämlich die Gasfeder - in bekannter Weise - teilweise mit Flüssigkeit und nur zum Teil mit einem diese Flüssigkeit unter Druck setzenden Druckgas gefüllt ist.

Wie den Fig. 1 und 2 entnehmbar ist, ist der Ventilkörper 22 zweiteilig ausgebildet, d.h. dem äußeren Abschnitt 23 ist noch ein Ring 47 zugeordnet, der auf einem die Führungsbohrung 31 aufnehmenden stutzenartigen Bereich 48 des äußeren Abschnitts 23 angeordnet ist und der gegen eine radial zur Achse 21 verlaufende Anlagefläche 49 des äußeren Abschnitts 23 anliegt. Die Ringnut 26 ist in dem Ring 47 ausgebildet und wird durch die Anlagefläche 49 als eine Seitenfläche der Ringnut 26 vervollständigt. Der Ring 47 ist an seiner zylindrischen Außenumfangsfläche 50 mit einer kegelstumpfförmigen Abschrägung 51 versehen, die sich zu seiner äußeren Oberfläche 52 hin verjüngt. Eine entsprechende Abschrägung 53 ist an dem am kolbenstangenseitigen Ende befindlichen Abschlußring 9 ausgebildet, die sich ebenfalls zur äußeren Oberfläche 54 hin verjüngt.

In Fig. 2 ist angedeutet, daß die Ringdichtung 28 und gegebenenfalls auch die Ringdichtung 10 in unverformtem Zustand einen Außendurchmesser d aufweisen, der geringfügig kleiner als der Innendurchmesser D des Außenzylinders 3 ist, dessen Innenwand 11 durchgehend zylindrisch ausgebildet ist, also über ihre gesamte Länge einen gleichbleibenden Innendurchmesser D aufweist. Die Ringnut 26 im Ring 47 und die die Ringdichtung 10 aufnehmende Ringnut 55 in dem Abschlußring 9 sind so ausgebildet, daß beim Andrücken des Rings 47 gegen die Anlagefläche 49 des Ventilkörpers 22 bzw. beim Andrücken des Abschlußringes 9 gegen die topfförmige Hülse 13 die Ringdichtung 28 bzw. die Ringdichtung 10 axial derart zusammengedrückt werden, daß sie radial nach außen verpreßt werden, wodurch sich ihr Außendurchmesser so weit vergrößert, daß die Ringdichtung 28 bzw. 10 dichtend an der Innenwand 11 des Außenzylinders 3 anliegt. Die axiale Erstreckung a der Ringnut 26 bei an der Anlagefläche 49 anliegendem Ring 47 ist also kleiner als die Dicke b der Ringdichtung 28 bzw. 10 in unverspanntem Zustand, wie aus Fig. 2 hervorgeht. Der Innendurchmesser d' der Ringdichtung 28 bzw. 10 entspricht dem Innendurchmesser D' der Ringnut 26 bzw. 55. Der Querschnitt e der Ringdichtung 28 ist etwas größer als der Querschnitt der Ringnut 26. Es gilt also, e > 0,5 a (D - D'). Aus Gründen der Übersichtlichkeit sind die geschilderten Maßverhältnisse in Fig. 2 nur für das Ventil 19 dargestellt. Damit die Ringdichtung 10 sich beim Verspannen nicht außerhalb der Ringnut 55 zwischen Abschlußring 9 und die topfförmige Hülse 13 legt, ist letztere mit einem Ringbund 13a versehen, der in die Ringnut 55 eintaucht und die Verspannung der Ringdichtung 10 beim Zusammendrücken in Richtung der Achse 21 bewirkt.

Die Montage der Gasfeder geht wie folgt vor sich:
Das gesamte Ventil 19 ist vormontiert und in das zugehörige Ende des Innenzylinders 2 gesteckt. Die Kolbenstange 8 mit dem Kolben 5 ist von der anderen Seite her in den Innenzylinder 2 eingeschoben. Das Zentrierstück 15 ist in das entsprechende Ende des Innenzylinders 2 eingeschoben. Die topfförmige Hülse 13 mit der Mehrfach-Lippen-Dichtung 14 ist vom freien Ende der Kolbenstange 8 her auf diese aufgeschoben, und zwar bis zum Anschlag am Zentrierstück 15. Der Abschlußring 9 mit der Ringdichtung 10 ist lose auf die Hülse 13 aufgeschoben, und zwar in der gleichen Weise, wie der Ring 47 mit der Ringdichtung 28 auf den stutzenartigen Bereich 48 des Ventilkörpers 22 aufgesteckt ist. Diese vormontierte Baueinheit wird mit dem Ventil 19 voraus in den Außerzylinder 3 eingeschoben. Sie wird also - bezogen auf Fig. 1 - vom unteren kolbenstangenseitigen Ende des Gehäuses 1 her in den Außenzylinder 3 eingeschoben und durch diesen hindurchgeschoben. Aufgrund des geschilderten Untermaßes der Ringdichtung 28 gegenüber der Innenwand 11 des Außenzylinders 3 kommt die Ringdichtung 28 während dieses Hindurchschiebens nicht zur Anlage an der Innenwand 11 des Außenzylinders 3. Gleiches gilt für die Ringdichtung 10, wenn die Baueinheit vom ventilseitigen - in Fig. 1 oberen - Ende des Gehäuses 1 mit der Kolbenstange 8 zuerst in den Außenzylinder 3 eingeschoben wird. Am Ende dieser Einschubbewegung werden parallel zur Achse 21 und konzentrisch zu dieser Stanzwerkzeuge gegen die Stirnseiten der Ränder 56, 57 des Außenzylinders 3 gedrückt, und zwar in der Weise, daß aus der Innenwand 11 des Außenzylinders 3 jeweils ein Span herausgeschnitten wird, der mit dem Außenzylinder 3 fest verbunden bleibt und durch das gleichzeitige Stauchen einen nach innen zur Achse 21 hin gerichteten nasenartigen Vorsprung 30 bzw. 12 bildet, der gegen die Abschrägung 51 des Rings 47 bzw. die Abschrägung 53 des Abschlußrings 9 anliegt. Diese die nasenartigen Vorsprünge 30 bzw. 12 bildenden Späne werden unter Bildung relativ feiner nur wenige Zehntel Millimeter tiefer Nuten 58 bzw. 59 aus der Innenwand 11 des Außenzylinders 3 geschnitten. Wie die Fig. 3 und 4 erkennen lassen, ist es zweckmäßig, an jedem Ende des Außenzylinders 3 sechs derartige Vorsprünge 30 bzw. 12 zu formen. Während dieser Formung der Vorsprünge 30 bzw. 12 wird einerseits der Ring 47 gegen die Anlagefläche 49 des Ventilkörpers 22 und andererseits der Abschlußring 9 gegen die topfförmige Hülse 13 gedrückt, wodurch aufgrund der geschilderten Größenverhältnisse die Ringdichtungen 28 bzw. 10 in Richtung der Achse 21 zusammengedrückt und damit radial nach außen verformt werden. Sie legen sich erst jetzt mit dem erforderlichen Dichtdruck an die Innenwand 11 des Außenzylinders 3 an und liegen darüber hinaus selbstverständlich auch an den Wänden der Ringnut 26 bzw. 55 an.

Da zumindest die fast vollständig durch den Außenzylinder 3 geschobene Ringdichtung 28 bzw. 10 während dieses Durchschiebens mit der Innenwand 11 des Außenzylinders 3 nicht in Berührung kommt, braucht die Innenwand 11 keine gute Oberflächenqualität zu haben, da die Ringdichtung 28 bzw. 10 an ihr nicht beschädigt werden kann. Es ist also nicht notwendig, daß für den Außenzylinder 3 nahtlos gezogene Rohre eingesetzt werden, oder aber daß bei Einsatz von geschweißten Rohren diese an ihrer Innenseite nachgezogen oder in anderer Weise einer Oberflächenbehandlung unterzogen werden. Demgegenüber muß die äußere Oberfläche 60 des Außenzylinders 3 auf eine exakt zylindrische Form mit geringer Oberflächenrauhtiefe gebracht werden, so daß im Bereich des Ventils 19 auch ein Konus 61 angedreht werden kann, der zur Befestigung in einer entsprechend ausgebildeten Aufnahme an der Unterseite eines Stuhlsitzes od.dgl. dient.

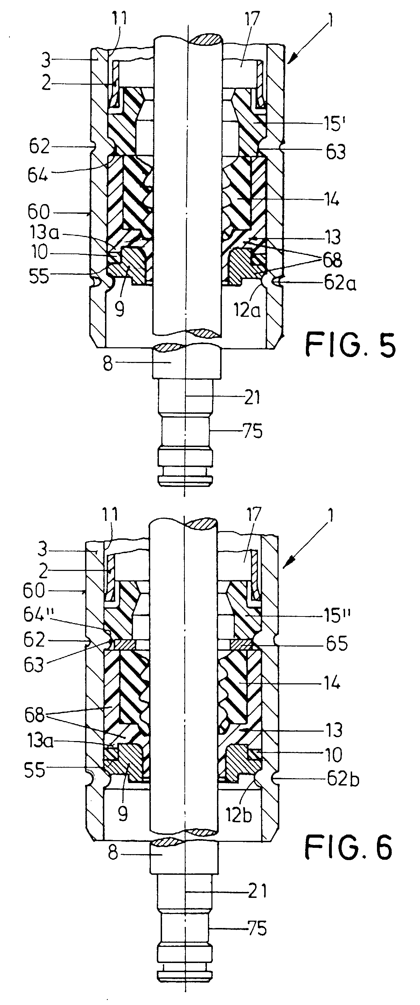

Bei der Ausführungsform nach Fig. 5 ist der Außenzylinder 3 der Gasfeder in seiner äußeren Oberfläche 60 mit mindestens einer nach innen zur Achse 21 hin gerichteten Eindrückung 62 vorgesehen, der mindestens ein an der Innenwand 11 des Außenzylinders ausgebildeter Vorsprung 63 entspricht. Die Eindrückung 62 und entsprechend der Vorsprung 63 können durch eine ringförmig umlaufenden Sicke gebildet werden. Es können aber auch mehrere napfförmige Eindrückungen 62 versehen sein, denen entsprechende etwa halbkugelförmige Vorsprünge 63 entsprechen, die über den Umfang verteilt in einer Ebene radial zur Achse 21 angeordnet sind. Zeichnerisch macht dies keinen Unterschied. Gegen diesen mindestens einen Vorsprung 63 liegt die topfförmige Hülse 13 axial fest an. Das Zentrierstück 15' ist mit einer den mindestens einen Vorsprung 63 aufnehmenden äußeren Ausnehmung 64 versehen. Die Mehrfach-Lippen-Dichtung 14 stützt sich - wie beim Ausführungsbeispiel nach Fig. 1 - in Richtung der Achse 21 gegen das Zentrierstück 15' ab. Bei diesem Ausführungsbeispiel sind nasenartige Vorsprünge 12a vorgesehen, die gleichermaßen wie die Vorsprünge 63 durch napfförmige Eindrückungen 62a in die äußere Oberfläche 60 des Außenzylinders 3 der Gasfeder erzeugt werden.

Bei der Ausführungsform nach Fig. 6 stützt sich die topfförmige Hülse 13 wiederum gegen mindestens einen Vorsprung 63 ab. In diesem Fall stützt sich die Mehrfach-Lippen-Dichtung 14 in Richtung der Achse 21 und zum Gehäuseraum 17 hin gegen eine Ringscheibe 65 ab, die sich wiederum gegen das Zentrierstück 15" abstützt, das mit einer den mindestens einen Vorsprung 63 teilweise aufnehmenden Ausnehmung 64" versehen ist. Bei diesem Ausführungsbeispiel ist nur ein umlaufender Vorsprung 12b vorgesehen, der den Abschlußring 9 hält und der - wie vorstehend bereits zu Fig. 5 beschrieben - durch eine umlaufende Sicke 62b in der äußeren Oberfläche 60 des Außenzylinders 3 erzeugt wird.

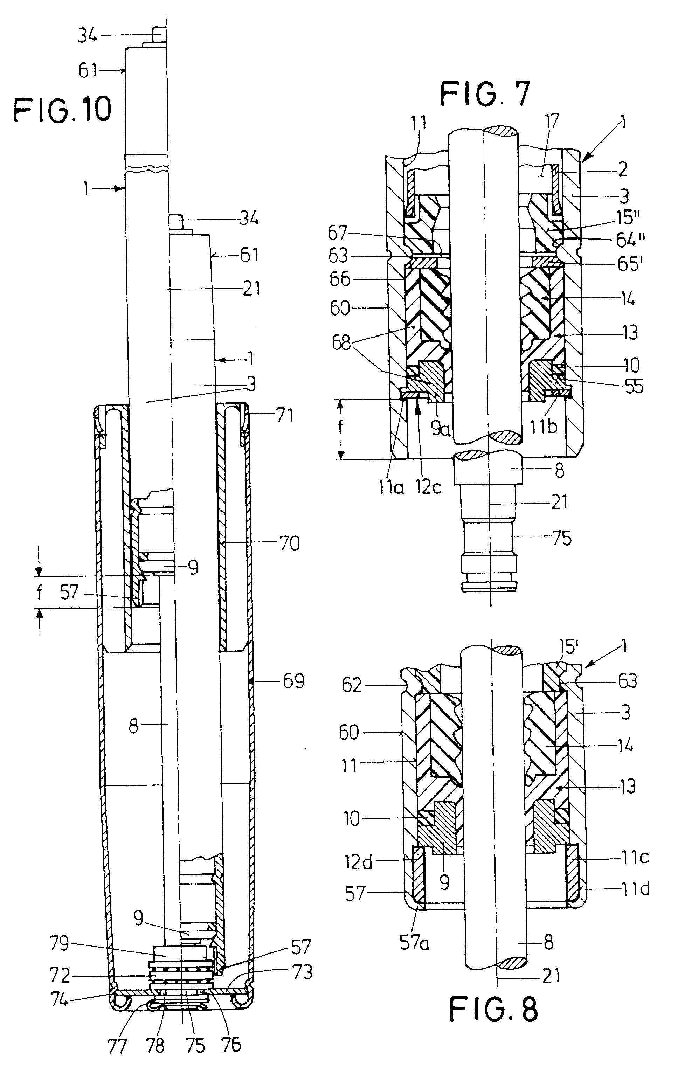

Bei der weiteren Ausführungsform nach Fig. 7 nimmt das Zentrierstück 15" in seiner Ausnehmung 64" den mindestens einen Vorsprung 63 auf und ist dadurch axial im Gehäuse 1 in Richtung zum kolbenstangenaustrittsseitigen Ende festgelegt. Die Mehrfach-Lippen-Dichtung 14 und die topfförmige Hülse 13 stützen sich in Richtung der Achse 21 und zum Gehäuseraum 17 hin gegen eine Ringscheibe 65' ab, die sich gegen den mindestens einen Vorsprung 63 abstützt. Sie weist hierzu eine den mindestens einen Vorsprung 63 aufnehmende äußere Ausnehmung 66 auf. Das Zentrierstück 15" liegt gegenüber der Ringscheibe 65' frei, was in Fig. 7 durch einen Spalt 67 angedeutet ist. Bei dieser Ausgestaltung wird der Vorsprung 12c durch ein in eine Innennut 11a in der Innenwand 11 des Außenzylinders 3 angeordnetes Befestigungselement 11b, beispielsweise einer Seeger-Ring gebildet.

Die Ausführungsform nach Fig. 8 entspricht der nach Fig. 5, wobei der gegen den Abschlußring 9 anliegende Vorsprung 12d durch eine Distanzhülse 11c gebildet wird, die in einer Ausnehmung 11d in der Innenwand 11 des Außenzylinders 3, und zwar im Bereich von dessen Rand 57, ausgebildet ist. Hierbei ist der Rand 57 mit einer die Distanzhülse 11c haltenden und gegen den Abschlußring 9 drückenden Umbördelung 57a versehen.

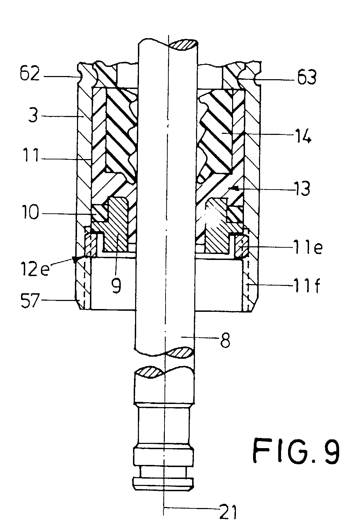

Die Ausgestaltung nach Fig. 9 entspricht ebenfalls im wesentlichen der nach Fig. 5, wobei in diesem Fall der Vorsprung 12e durch einen Schraubring 11e gebildet ist, der in ein Innengewinde 11f an der Innenwand 11 geschraubt ist, das an der Innenwand 11 des Außenzylinders 3 im Bereich von dessen Rand 57 ausgebildet ist.

Bei allen Ausführungsformen bilden die topfförmige Hülse 13 und der Abschlußring 9 gemeinsam einen Dichtungskörper 68.

Bei allen dargestellten Ausführungsformen liegt die topfförmige Hülse 13 nicht gasdicht gegen die Innenwand 11 des Außenzylinders 3 an, wobei der vorhandene Spalt so schmal ist, daß er zeichnerisch nicht darstellbar ist. Dies kann mit den geschilderten Maßnahmen dazu verwendet werden, die Füllung der Gasfeder mit Druckgas zu bewerkstelligen. Bei der Ausführungsform nach Fig. 1 geschieht dies in der Weise, daß nach dem Einführen der oben geschilderten, aus Ventil 19, Innenzylinder 2, Kolbenstange 8 mit Kolben 5, Zentrierstück 15, topfförmiger Hülse 13 und Dichtung 14 bestehenden Einheit und nach dem Aufsetzen des Abschlußrings 9 mit der Ringdichtung 10 und nach Herstellung der nasenförmigen Vorsprünge 30 im Bereich des Ventils 19 das Gehäuse 1 mit Druckgas gefüllt werden kann, das zwischen dem Abschlußring 9, der unverspannten Dichtung 10, der topfförmigen Hülse 13 einerseits und der Innenwand 11 des Außenzylinders 3 andererseits in das Gehäuse 1 gedrückt wird. Bei den Ausführungsformen nach den Fig. 5, 6 und 7 werden lediglich eine aus Ventil 19, Innenzylinder 2, Kolbenstange 8 mit Kolben 5 und Zentrierstück 15' oder 15" bestehende Einheit in den Außenzylinder 3 eingeschoben und einerseits die nasenförmigen Vorsprünge 30 im Bereich des Ventils 19 und andererseits der mindestens eine Vorsprung 63 hergestellt, wodurch diese Einheit im Außenzylinder 3 in beiden Richtungen der Achse 21 festgelegt ist. Wenn mehrere über den Umfang verteilte, beispielsweise sechs in gleichen Winkelabständen angeordnete Vorsprünge 63 vorgesehen werden, dann läßt sich die Einheit in besonders guter Weise unter axialer und radialer Verspannung der Dichtung 28 zusammendrücken. Es kann nämlich montagetechnisch diese Einheit mittels eines Stempels zusammengedrückt werden, an dem auch die Werkzeuge zur Erzeugung der Eindrückungen 62 und damit der Vorsprünge 63 angebracht sind. Im Anschluß daran werden die topfförmige Hülse 13, die Dichtung 14 und der Abschlußring 9 mit der Ringdichtung 10 aufgesetzt und das Gehäuse 1 mit Druckgas gefüllt. Wenn das Gehäuse 1 mit Druckgas gefüllt ist, werden die Vorsprünge 12 in der geschilderten Weise erzeugt, wobei die Dichtung 10 in der geschilderten Weise verspannt wird, so daß dann das Gehäuse 1 gasdicht ist. Wie die vorstehende Schilderung zeigt, sind die Ausführungsformen nach den Fig. 5 bis 9 besonders geeignet, die Gasfüllung in der vorstehend geschilderten Weise vorzunehmen.

Bei allen Ausführungsformen nach den Fig. 1, 5, 6, 7, 8, 9 ist ersichtlich, daß der Rand 57 des Außenrohres 3 am kolbenstangenaustrittsseitigen Ende des Gehäuses 1 über den Abschlußring 9 hin vorsteht und zwar um ein Maß f. Dies führt zu weiteren Vorteilen, wie sich aus den Erläuterungen zu Fig. 10 ergibt. Dort ist eine Stuhl-Säule dargestellt, die ein Standrohr 69 aufweist, in dem eine längenverstellbare Gasfeder der zuvor beschriebenen Art als pneumatisches oder hydropneumatisches Kolben-Zylinder-Verstellelement angeordnet ist. Das Gehäuse 1 der Gasfeder ist in Richtung der Achse 21 verschiebbar in einer Führungsbüchse 70 abgestützt, die in einem - in Fig. 10 oberen - Ende 71 des Standrohres 69 angeordnet ist. Im dargestellten Ausführungsbeispiel stützt sich der Außenzylinder 3 in der Führungsbüchse 70 ab.

Die Kolbenstange 8 ist über ein Axial-Wälzlager 72 gegenüber einer Bodenplatte 73 des Standrohres 69 in Richtung der Achse 21 abgestützt. Die Bodenplatte 73 befindet sich an dem dem einen Ende 71 entgegengesetzten anderen - in Fig. 10 unteren - Ende 74 des Standrohres 69. Ein das Axial-Wälzlager 72 durchsetzender Zapfen 75 der Kolbenstange 8 erstreckt sich durch eine zur Achse 21 konzentrisch ausgebildete Öffnung 76 der Bodenplatte 73. Er ist gegen die Unterseite der Bodenplatte 73 mittels einer Feder-Sicherungsklammer 77 gegen ein Herausziehen gesichert. Der Durchmesser der Öffnung 76 ist größer als der Durchmesser des Zapfens 75. Durch diese geschilderte Befestigung ist die Gasfeder gegenüber dem Standrohr 69 drehbar. Sie ist aufgrund des radialen Spiels 78 zwischen Zapfen 75 und Öffnung 76 in geringem Maße gegenüber dem Standrohr 69 neigbar, also verkantungsfrei in der Führungsbüchse 70 geführt. Sie ist schließlich mit ihrer Kolbenstange 8 in Richtung der Achse 21 gegenüber dem Standrohr 69 festgelegt, so daß bei Längenverstellungen der Gasfeder durch Betätigung des Betätigungsstiftes 34 das Gehäuse 1 der Gasfeder aus dem Standrohr 69 herausgefahren oder in dieses hineingeschoben wird. Auf der Kolbenstange 8 ist ein ringscheibenförmiges Dämpfungselement 79, beispielsweise aus Gummi, angeordnet, das als Anschlagdämpfer beim Aufsetzen des Gehäuses 1 der Gasfeder dient und zwar dann, wenn das Gehäuse 1 der Gasfeder weitestmöglich in das Standrohr 69 eingefahren wird, die Stuhl-Säule also ihre geringstmögliche Höhe hat. Hierbei übergreift der Rand 57 des Gehäuses 1 das Dämpfungselement 79 und gegebenenfalls noch teilweise das Axial-Wälzlager 72 in Richtung der Achse 21.

Das Dämpfungselement 79 kommt zur Anlage an dem Abschlußring 9, und zwar an einem an ihm ausgebildeten Anschlagbund 9a. Diese Position ist in Fig. 10 rechts unten dargestellt. Wenn dagegen die Kolbenstange 8 ihre weitestmöglich aus dem Gehäuse 1 ausgefahrene Stellung einnimmt, in der das Gehäuse 1 weitestmöglich aus dem Standrohr 69 ausgefahren ist, dann dient der Rand 57 zusätzlich zur Führung des Gehäuses 1 in der Führungsbüchse 70, die die ausschließliche Seitenführung für das Gehäuse 1 bildet, da die Kolbenstange 8 in der Bodenplatte 73 mit radialem Spiel angeordnet ist. Ein Maximum an zusätzlicher Führungslänge des Gehäuses 1 in der Führungsbüchse 70 bei ausgefahrenem Gehäuse 1 wird dann erreicht, wenn die Länge f des Randes 57 so groß ist, daß die Stirnseite des Randes 57 bei extremer Belastung der Gasfeder und damit bei komprimiertem Dämpfungselement 79 gerade noch nicht auf der Bodenplatte 73 aufsetzt. Selbstverständlich müssen die Durchmesser des Axialwälzlagers 71 und des Dämpfungselementes 79 so gewählt werden, daß der Rand 57 des Außenzylinders 3 gegebenenfalls samt Distanzhülse 11c oder Schraubring 11e kollisionsfrei darüber geschoben werden kann.

Die Länge f des Randes 57 kann in der Praxis > 5 mm und bevorzugt 10 bis 15 mm betragen, wodurch wiederum die Führungslänge in der Führungsbüchse 70 deutlich verlängert wird, und zwar bei weitestmöglich ausgefahrenem Gehäuse 1 um 20 bis 25%.

## Patentansprüche

1. Längenverstellbare Gasfeder für höhenverstellbare Stühle, Tische od.dgl.,
- mit einem Außenzylinder (3) mit einer Mittel-Längs-Achse (21)
- mit einem konzentrisch zur Mittel-Längs-Achse (21) im Außenzylinder (3) angeordneten Innenzylinder (2)
- mit einem im Innenzylinder (2) in Richtung der Mittel-Längs-Achse (21) verschiebbar angeordneten Kolben (5)
- mit einer konzentrisch zur Mittel-Längs-Achse (21) angeordneten, am Kolben (5) befestigten, aus dem einen Ende des Außerzylinders (3) herausgeführten Kolbenstange (8)
- mit einem Ventil (19) an dem anderen Ende des Außenzylinders (3), das einen Ventilkörper (22) mit einer zur Innenwand (11) des Außenzylinders (3) offenen, eine Ringdichtung (28) enthaltende Ringnut (26) aufweist,
- mit einer Dichtungsanordnung zwischen der Kolbenstange (8) und der Innenwand (11) des Außenzylinders (3) an dem einen Ende des Außenzylinders (3), die einen Dichtungskörper (68) mit einer zur Innenwand (11) des Außenzylinders (3) offenen, eine Ringdichtung (10) aufnehmende Ringnut (55) aufweist,
- mit einer den Ventilkörper (22) haltenden Verformung am Rand (56) des Außenzylinders (3) und
- mit einer den Dichtungskörper (68) haltenden Verformung am Rand (57) des Außenzylinders (3),
dadurch gekennzeichnet,daß
mindestens der dem Dichtungskörper (68) zugeordnete Rand (57) des Außenzylinders (3) im wesentlichen ringzylindrisch ausgebildet ist und über den Dichtungskörper (68) vorsteht.

2. Längenverstellbare Gasfeder nach Anspruch 1, dadurch gekennzeichnet, daß die den Dichtungskörper (68) haltende Verformung am Rand (57) des Außenzylinders (3) durch mindestens einen Vorsprung (12) gebildet ist.

3. Längenverstellbare Gasfeder nach Anspruch 2, dadurch gekennzeichnet, daß die den Dichtungskörper (68) haltende Verformung am Rand (57) des Außenzylinders (3) durch mehrere über dessen Umfang verteilt angeordnete Vorsprünge (12) gebildet ist.

4. Längenverstellbare Gasfeder nach Anspruch 3, dadurch gekennzeichnet, daß die Vorsprünge (12) als aus der Innenwand (11) des Außenzylinders (3) ausgeschnittene, gegen den Dichtungskörper (68) anliegende nasenartige Vorsprünge (12) ausgebildet sind.

5. Längenverstellbare Gasfeder nach Anspruch 1, dadurch gekennzeichnet, daß der Ventilkörper (22) und/oder der Dichtungskörper (68) zwei im Bereich der jeweiligen Ringnut (26, 55) voneinander getrennte Teile (Ventilkörper 22, Ring 47; Hülse 13, Abschlußring 9) aufweist, daß die dem Ventilkörper (22) und/oder dem Dichtungskörper (68) jeweils zugeordnete Ringdichtung (28, 10) bei voneinander in Richtung der Mittel-Längs-Achse (21) beabstandeter Lage der voneinander getrennten Teile (Ventilkörper 22, Ring 47; Hülse 13, Abschlußring 9) einen Außendurchmesser (d) aufweist, der gleich oder geringfügig kleiner ist als der Innendurchmesser (D) des Außenzylinders (3), daß der Querschnitt (0,5 a (D - D')) der Ringnut (26, 55) bei aneinanderliegenden Teilen (Ventilkörper 22, Ring 47; Hülse 13, Abschlußring 9) des Ventilkörpers (22) und/oder des Dichtungskörpers (68) kleiner ist als der Querschnitt (e) der jeweiligen Ringdichtung (28, 10) und daß bei in Richtung der Mittel-Längs-Achse (21) aneinanderliegenden Teilen (Ventilkörper 22, Ring 47; Hülse 13, Abschlußring 9) des Ventilkörpers (22) und/oder des Dichtungskörpers (68) die jeweilige Ringdichtung (28, 10) dichtend an der Innenwand (11) des Außenzylinders (3) anliegt.

6. Längenverstellbare Säule für höhenverstellbare Stühle, Tische oder dergleichen, die eine längenverstellbare Gasfeder aufweist,
- mit einem Außenzylinder (3) mit einer Mittel-Längs-Achse (21)
- mit einem konzentrisch zur Mittel-Längs-Achse (21) im Außenzylinder (3) angeordneten Innenzylinder (2)
- mit einem im Innenzylinder (2) in Richtung der Mittel-Längs-Achse (21) verschiebbar angeordneten Kolben (5)
- mit einer konzentrisch zur Mittel-Längs-Achse (21) angeordneten, am Kolben (5) befestigten, aus dem einen Ende des Außenzylinders (3) herausgeführten Kolbenstange (8)
- mit einem Ventil (19) an dem anderen Ende des Außenzylinders (3), das einen Ventilkörper (22) mit einer zur Innenwand (11) des Außenzylinders (3) offenen, eine Ringdichtung (28) enthaltende Ringnut (26) aufweist,
- mit einer Dichtungsanordnung zwischen der Kolbenstange (8) und der Innenwand (11) des Außenzylinders (3) an dem einen Ende des Außenzylinders (3), die einen Dichtungskörper (68) mit einer zur Innenwand (11) des Außenzylinders (3) offenen, eine Ringdichtung (10) aufnehmende Ringnut (55) aufweist,
- mit einer den Ventilkörper (22) haltenden Verformung am Rand (56) des Außenzylinders (3) und
- mit einer den Dichtungskörper (68) haltenden Verformung am Rand (57) des Außenzylinders (3),
und die ein Standrohr (69) aufweist,
- mit einer an einem Ende (71) des Standrohres (69) angeordneten, den Außenzylinder (3) der Gasfeder führenden Führungsbüchse (70),
- mit einer am anderen Ende (74) des Standrohres (69) angebrachten, eine von einem Zapfen (75) der Kolbenstange (8) mit radialem Spiel durchsetzte Öffnung aufweisenden Bodenplatte (73),
- mit einem sich einerseits gegen die Bodenplatte (73) und andererseits gegen die Kolbenstange (8) abstützenden Drehlager (Axial-Wälzlager 72),
- mit einer Sicherung (Feder (Feder-Sicherungsklammer 77) zwischen Kolbenstange (8) und Bodenplatte (73) und
- mit einem auf der Kolbenstange (8) zwischen dem Drehlager (Axial-Wälzlager 72) und dem Dichtungskörper (68) angeordneten Dämpfungselement (79),
dadurch gekennzeichnet, daß mindestens der dem Dichtungskörper (68) zugeordnete Rand (57) des Außenzylinders (3) im wesentlichen ringzylindrisch ausgebildet ist und über den Dichtungskörper (68) vorsteht, und daß bei in das Standrohr (69) weitestmöglich eingefahrenem Außenzylinder (3) der Gasfeder der dem Dichtungskörper (68) zugeordnete Rand (57) des Außenzylinders (3) zumindest das Dämpfungselement (79) in Richtung der Mittel-Längs-Achse (21) zumindest teilweise übergreift.

7. Längenverstellbare Säule nach Anspruch 6, dadurch gekennzeichnet, daß der dem Dichtungskörper (68) zugeordnete Rand (57) des Außenzylinders (3) über den Dichtungskörper (68) um ein Maß vorsteht, für das gilt f > 5 mm.

8. Längenverstellbare Säule nach Anspruch 6, dadurch gekennzeichnet, daß die den Dichtungskörper (68) haltende Verformung am Rand (57) des Außenzylinders (3) durch mindestens einen Vorsprung (12) gebildet ist.

9. Längenverstellbare Säule nach Anspruch 8, dadurch gekennzeichnet, daß die den Dichtungskörper (68) haltende Verformung am Rand (57) des Außenzylinders (3) durch mehrere über dessen Umfang verteilt angeordnete Vorsprünge (12) gebildet ist.

10. Längenverstellbare Säule nach Anspruch 9, dadurch gekennzeichnet, daß die Vorsprünge (12) als aus der Innenwand (11) des Außenzylinders (3) ausgeschnittene, gegen den Dichtungskörper (68) anliegende nasenartige Vorsprünge (12) ausgebildet sind.

## Claims

1. A longitudinally adjustable gas spring for adjustable-height chairs, tables or the like, comprising
- an exterior cylinder (3) with a central longitudinal axis (21);
- an interior cylinder (2) arranged concentrically to the central longitudinal axis (21) in the exterior cylinder (3);
- a piston (5) arranged displaceably in the direction of the central longitudinal axis (21) in the interior cylinder (2);
- a piston rod (8) arranged concentrically to the central longitudinal axis (21) and mounted on the piston (5) and guided out of one end of the exterior cylinder (3);
- a valve (19) on the other end of the exterior cylinder (3), which valve (19) has a valve body (22) with an annular groove (26) open towards the inside wall (11) of the exterior cylinder (3) and containing an annular seal (28);
- a sealing arrangement between the piston rod (8) and the inside wall (11) of the exterior cylinder (3) on one end of the exterior cylinder (3), which arrangement has a sealing body (68) with an annular groove (55) open towards the inside wall (11) of the exterior cylinder (3) and accommodating an annular seal (10);
- a deformation provided on the edge (56) of the exterior cylinder (3) and retaining the valve body (22); and
- a deformation provided on the edge (57) of the exterior cylinder (3) and retaining the sealing body (68),
characterized in that
at least the edge (57), assigned to the sealing body (68), of the exterior cylinder (3) is substantially annular cylindrical and projects from the sealing body (68).

2. A longitudinally adjustable gas spring according to claim 1, characterized in that the deformation retaining the sealing body (68) is formed on the edge (57) of the exterior cylinder (3) by at least one projection (12).

3. A longitudinally adjustable gas spring according to claim 2, characterized in that the deformation retaining the sealing body (68) is formed on the edge (57) of the exterior cylinder (3) by several projections (12) distributed along the circumference of the exterior cylinder (3).

4. A longitudinally adjustable gas spring according to claim 3, characterized in that the projections (12) are configured as projection noses (12) cut from the inside wall (11) of the exterior cylinder (3) and bearing against the sealing body (68).

5. A longitudinally adjustable gas spring according to claim 1, characterized in that the valve body (22) and/or the sealing body (68) comprise two components (valve body 22, ring 47; sleeve 13, closing ring 9) separate from each other in the vicinity of the respective annular groove (26, 55); in that, when the components (valve body 22, ring 47; sleeve 13, closing ring 9) separate from each other are in a position in which they are spaced from each other in the direction of the central longitudinal axis (21), the annular seal (28, 10) allocated to the valve body (22) and/or the sealing body (68) has an outside diameter (d) equal to, or slightly less than, the inside diameter (D) of the exterior cylinder (3); in that, when the components (valve body 22, ring 47; sleeve 13, closing ring 9) of the valve body (22) and/or the sealing body (68) bear against each other, the cross-section (0.5 a (D - D)) of the annular groove (26, 55) is smaller than the cross-section (e) of the respective annular seal (28, 10); and in that, when the components (valve body 22, ring 47; sleeve 13, closing ring 9) of the valve body (22) and/or the sealing body (68) bear against each other in the direction of the central longitudinal axis (21), the respective annular seal (28, 10) rests sealingly on the inside wall (11) of the exterior cylinder (3).

6. A longitudinally adjustable column for adjustable-height chairs, tables or the like, having a longitudinally adjustable gas spring, comprising
- an exterior cylinder (3) with a central longitudinal axis (21);
- an interior cylinder (2) arranged concentrically to the central longitudinal axis (21) in the exterior cylinder (3);
- a piston (5) arranged displaceably in the direction of the central longitudinal axis (21) in the interior cylinder (2);
- a piston rod (8) arranged concentrically to the central longitudinal axis (21) and mounted on the piston (5) and guided out of one end of the exterior cylinder (3);
- a valve (19) on the other end of the exterior cylinder (3), which valve (19) has a valve body (22) with an annular groove (26) open towards the inside wall (11) of the exterior cylinder (3) and containing an annular seal (28),
- a sealing arrangement between the piston rod (8) and the inside wall (11) of the exterior cylinder (3) on one end of the exterior cylinder (3), which arrangement has a sealing body (68) with an annular groove (55) open towards the inside wall (11) of the exterior cylinder (3) and accommodating an annular seal (10);
- a first deformation provided on the edge (56) of the exterior cylinder (3) and retaining the valve body (22); and
- a second deformation provided on the edge (57) of the exterior cylinder (3) and retaining the sealing body (68);
and having an upright tube (69), comprising
- a guide bush (70) arranged on one end (71) of the upright tube (69) and guiding the exterior cylinder (3) of the gas spring;
- a bottom plate (73) arranged on the other end (74) of the upright tube (69) and having an opening passed through with some radial clearance by a pin (75) of the piston rod (8);
- a pivot bearing (axial ball and roller bearing 72) bearing against the bottom plate (73) on the one hand and against the piston rod (8) on the other hand;
- a safeguard element (securing spring clip 77) between the piston rod (8) and the bottom plate (73); and
- a damping member (79) arranged on the piston rod (8) between the pivot bearing (axial ball and roller bearing 72) and the sealing body (68);
characterized in that at least the edge (57), assigned to the sealing body (68), of the exterior cylinder (3) is substantially annular cylindrical and projects from the sealing body (68), and in that, when the exterior cylinder (3) of the gas spring is moved as far as possible into the upright tube (69), the edge (57), assigned to the sealing body (68), of the exterior cylinder (3) at least in part overlaps at least the damping member (79) in the direction of the central longitudinal axis (21).

7. A longitudinally adjustable column according to claim 6, characterized in that the edge (57), assigned to the sealing body (68), of the exterior cylinder (3) projects from the sealing body (68) by a length to which f > 5 mm applies.

8. A longitudinally adjustable column according to claim 6, characterized in that the deformation retaining the sealing body (68) is formed on the edge (57) of the exterior cylinder (3) by at least one projection (12).

9. A longitudinally adjustable column according to claim 8, characterized in that the deformation retaining the sealing body (68) is formed on the edge (57) of the exterior cylinder (3) by several projections (12) distributed along the circumference thereof.

10. A longitudinally adjustable column according to claim 9, characterized in that the projections (12) are projection noses (12) cut from the inside wall (11) of the exterior cylinder (3) and bearing against the sealing body (68).

## Revendications

1. Ressort pneumatique réglable en longueur pour chaises, tables ou analogues, réglables en hauteur,
- comprenant un cylindre extérieur (3) avec un axe longitudinal médian (21),
- comprenant un cylindre intérieur (2) disposé dans le cylindre extérieur (3) de manière concentrique à l'axe longitudinal médian (21),
- comprenant un piston (5) monté dans le cylindre intérieur (2) avec une possibilité de translation dans le sens de l'axe longitudinal médian (21),
- comprenant une tige de piston (8) qui est disposée de manière concentrique à l'axe longitudinal médian (21), qui est fixée au piston (5) et qui sort par l'une des extrémités du cylindre extérieur (3),
- comprenant, à l'autre extrémité du cylindre extérieur (3), une valve (19) qui comporte un corps formant valve (22) pourvu d'une gorge annulaire (26) qui est ouverte vers la paroi intérieure (11) du cylindre extérieur (3) et qui contient un joint annulaire (28),
- comprenant, entre la tige de piston (8) et la paroi intérieure (11) du cylindre extérieur (3) à l'une des extrémités du cylindre extérieur (3), une garniture d'étanchéité qui comporte un corps d'étanchéité (68) pourvu d'une gorge annulaire (55) qui est ouverte vers la paroi intérieure (11) du cylindre extérieur (3) et qui contient un joint annulaire (10),
- comprenant, sur le bord (56) du cylindre extérieur (3), une partie déformée qui retient le corps formant valve (22) et
- comprenant, sur le bord (57) du cylindre extérieur (3), une partie déformée retenant le corps d'étanchéité (68),
caractérisé en ce qu'au moins le bord (57) du cylindre extérieur (3) associé au corps d'étanchéité (68) est de forme sensiblement cylindro-annulaire et dépasse du corps d'étanchéité (68).

2. Ressort pneumatique réglable en longueur selon la revendication 1, caractérisé en ce que la partie déformée retenant le corps d'étanchéité (68) au bord (57) du cylindre extérieur (3) est formée par au moins une saillie (12).

3. Ressort pneumatique réglable en longueur selon la revendication 2, caractérisé en ce que la partie déformée retenant le corps d'étanchéité (68) au bord (57) du cylindre extérieur (3) est formée par plusieurs saillies (12) réparties sur son pourtour.

4. Ressort pneumatique réglable en longueur selon la revendication 3, caractérisé en ce que les saillies (12) sont conçues sous la forme de saillies en forme de talons (12) découpées dans la paroi intérieure (11) du cylindre extérieur (3) et appliquées contre le corps d'étanchéité (68).

5. Ressort pneumatique réglable en longueur selon la revendication 1, caractérisé en ce que le corps formant valve (22) et/ou le corps d'étanchéité (68) comportent deux parties (corps formant valve 22, anneau 47 ; manchon 13, anneau de terminaison 9) séparées l'une de l'autre dans la zone de la gorge annulaire correspondante (26, 55), en ce que le joint annulaire (28, 10) associé respectivement au corps formant valve (22) et/ou au corps d'étanchéité (68) présente, lorsque les parties séparées l'une de l'autre (corps formant valve 22, anneau 47 ; manchon 13, anneau de terminaison 9) sont distantes l'une de l'autre dans le sens de l'axe longitudinal médian (21), un diamètre extérieur (d) qui est égal ou légèrement inférieur au diamètre intérieur (D) du cylindre extérieur (3), en ce que, lorsque lesdites parties (corps formant valve 22, anneau 47 ; manchon 13, anneau de terminaison 9) du corps formant valve (22) et/ou du corps d'étanchéité (68), sont accolées l'une à l'autre, la section transversale (0,5 a (D - D')) est inférieure à la section transversale (e) du joint annulaire correspondant (28, 10), et en ce que, lorsque les parties (corps formant valve 22, anneau 47 ; manchon 13, anneau de terminaison 9) du corps formant valve (22) et/ou du corps d'étanchéité (68) sont accolées l'une à l'autre dans le sens de l'axe longitudinal médian (21), le joint annulaire correspondant (28, 10) est appliqué de manière étanche contre la paroi intérieure (11) du cylindre extérieur (3).

6. Colonne réglable en longueur pour chaises, tables ou analogues, réglables en hauteur, qui comporte un ressort pneumatique réglable en longueur
- comprenant un cylindre extérieur (3) avec un axe longitudinal médian (21),
- comprenant un cylindre intérieur (2) disposé dans le cylindre extérieur (3) de manière concentrique à l'axe longitudinal médian (21),
- comprenant un piston (5) monté dans le cylindre intérieur (2) avec une possibilité de translation dans le sens de l'axe longitudinal médian (21),
- comprenant une tige de piston (8) qui est disposée de manière concentrique à l'axe longitudinal médian (21), qui est fixée au piston (5) et qui sort par l'une des extrémités du cylindre extérieur (3),
- comprenant, à l'autre extrémité du cylindre extérieur (3), une valve (19) qui comporte un corps formant valve (22) pourvu d'une gorge annulaire (26) qui est ouverte vers la paroi intérieure (11) du cylindre extérieur (3) et qui contient un joint annulaire (28),
- comprenant, entre la tige de piston (8) et la paroi intérieure (11) du cylindre extérieur (3) à l'une des extrémités du cylindre extérieur (3), une garniture d'étanchéité qui comporte un corps d'étanchéité (68) pourvu d'une gorge annulaire (55) qui est ouverte vers la paroi intérieure (11) du cylindre extérieur (3) et qui contient un joint annulaire (10),
- comprenant, sur le bord (56) du cylindre extérieur (3), une partie déformée qui retient le corps formant valve (22) et
- comprenant, sur le bord (57) du cylindre extérieur (3), une partie déformée retenant le corps d'étanchéité (68),
et qui comporte un tube vertical (69)
- comprenant une douille de guidage (70) qui est disposée à l'une des extrémités (71) du tube vertical (69) et qui guide le cylindre extérieur (3) du ressort pneumatique,
- comprenant une plaque de fond (73) qui est montée à l'autre extrémité (74) du tube vertical (69) et qui est pourvue d'un orifice traversé avec un jeu radial par un tourillon (75) de la tige de piston (8),
- comprenant un support pivotant (roulement axial 72) qui prend appui, d'une part, contre la plaque de fond (73) et, d'autre part, contre la tige de piston (8),
- comprenant un moyen d'arrêt (clavette d'arrêt élastique 77) entre la tige de piston (8) et la plaque de fond (73), et
- comprenant un élément amortisseur (79) disposé sur la tige de piston (8) entre le support pivotant (roulement axial 72) et le corps d'étanchéité (68),
caractérisée en ce qu'au moins le bord (57) du cylindre extérieur (3) associé au corps d'étanchéité (68) est de forme sensiblement cylindro-annulaire et dépasse du corps d'étanchéité (68), et en ce que, lorsque le cylindre extérieur (3) du ressort pneumatique est rentré à fond dans le tube vertical (69), le bord (57) du cylindre extérieur (3) associé au corps d'étanchéité (68) entoure, au moins partiellement, au moins l'élément amortisseur (79) dans le sens de l'axe longitudinal médian (21).

7. Colonne réglable en longueur selon la revendication 6, caractérisée en ce que le bord (57) du cylindre extérieur (3) associé au corps d'étanchéité (68) dépasse du corps d'étanchéité (68) d'une dimension f supérieure à 5 mm.

8. Colonne réglable en longueur selon la revendication 6, caractérisée en ce que la partie déformée retenant le corps d'étanchéité (68) au bord (57) du cylindre extérieur (3) est formée par au moins une saillie (12).

9. Colonne réglable en longueur selon la revendication 8, caractérisée en ce que la partie déformée retenant le corps d'étanchéité (68) au bord (57) du cylindre extérieur (3) est formée par plusieurs saillies (12) réparties sur son pourtour.

10. Colonne réglable en longueur selon la revendication 9, caractérisée en ce que les saillies (12) sont conçues sous la forme de saillies en forme de talons (12) découpées dans la paroi intérieure (11) du cylindre extérieur (3) et appliquées contre le corps d'étanchéité (68).
